# EUROPEAN PATENT SPECIFICATION

(11) **EP 2 878 102 B1**
(45) Date of publication and mention of the grant of the patent: **19.06.2019**
(21) Application number: 13742042.8
(22) Date of filing: 19.07.2013
(51) Int. Cl.: H04L 12/46, H04L 29/06

(54) **SECURE DATA TRANSFER**
SICHERE DATENÜBERTRAGUNG
TRANSFERT SÉCURISÉ DE DONNÉES

(30) Priority: 25.07.2012 GB 201213230
(43) Date of publication of application: 03.06.2015
(73) Proprietor: Echo Data Resilience Limited, St Neots Cambridgeshire PE16 6SH (GB)
(72) Inventor: WINCOTT, Simon, Huntingdon Cambridgeshire PE29 6SU (GB)
(74) Representative: Sharrock, Daniel John
(86) International application number: PCT/GB2013/051932
(87) International publication number: WO 2014/016571

(56) References cited:
- WO-A1-2006/058429
- US-A1- 2002 156 867
- US-A1- 2004 148 439
- US-A1- 2005 055 463

## Description

### Field of the invention

This invention relates to apparatus and methods for facilitating secure data transfer. More particularly, it seeks to provide a methodology for transferring data very securely, in-real time, in large quantities to and from many users, at low cost and with the ability to recover data immediately from one network to another through an un-trusted network, which may be the Internet or a wireless data connection for example.

### Background to the invention

Other methods that are used, in particular for off-site data backup, have inherent weaknesses: they are insufficiently secure, they do not support the transfer of data in true real-time, they do not support the transfer of large quantities of data, they are costly for many users and do not facilitate immediate data recovery.

US2002/0156867 describes techniques for managing access to storage resources, in which storage devices provide storage resources to users using a system of virtual addresses and virtual volume identifiers.

US2004/0148439 concerns a system and method for creating a peer to peer network by interconnecting private networks via publicly addressable residential gateways.

WO2006/058429 provides a system and method for a client connected to a server in a computer network to access a resource stored in the network.

US2005/0055463 discloses a method for sending data from a client application on a client device to a server application over a network.

### Summary of the invention

The weaknesses of the known data transfer methods referred to above are addressed using the present methodology, which facilitates the transfer of a broad spectrum of data file formats, in large quantities, securely, in real-time and economically for many users between a source and destination network through un-trusted media like the Internet or a wireless data link.

The present invention is directed at a source network comprising:
a source-external network router for connection to an external network; and
at least one computing device.

According to the invention, the source network includes a data port arrangement configured to transmit data received from the at least one computing device only to a specific destination device outside the source network via the router and the external network, the data is sent to the data port arrangement in a data packet including a destination address associated with the data port arrangement, and the data port arrangement comprises:
an input port configured to receive the data packet from the at least one computing device on the source network;
a data processing arrangement configured to replace the destination address with the address of the destination device and to encrypt the data to be sent to the destination device; and
an output port configured to output the encrypted data for transmission to the destination device via the router and the external network.

Central to the implementation of the present methodology is a data port arrangement. A data port arrangement is a device, or combination of devices, that is configured to undertake the functions and features described. A data port arrangement is a configured physical device. The physical device may be any device, or devices, capable of being configured to perform the function and features of a data port arrangement.

A data port arrangement is a device for installation on the source, or user's, local area network (LAN). It is communicatively coupled, for example using standard Ethernet cables, to a network device such as a router, switch or hub. This methodology can be implemented using one or more separate couplings between the data port arrangement and the network device. Preferably, the data port arrangement is configured for two independent couplings, each supporting a specific function within the data port arrangement.

A data port arrangement installed on the source network establishes a security association with a device on the destination network for transmitting data between them. An established security association between two devices is commonly known as an "encrypted tunnel". The security association encrypts the data sent between them. Therefore, user data passing between the two devices, through the tunnel, is encrypted. Preferably, the data output from the data port arrangement is also authenticated and/or verified. The destination device is similarly an integral part of the destination network. Such an encrypted tunnel may be referred to as a virtual private network (VPN). Any form of encrypted tunnel can be used so long as the encryption is sufficient to protect the data as it travels through an un-trusted network. An encrypted tunnel may for example use the Internet Protocol Security (IPsec) protocol suite and the Advanced Encryption Standard (AES) encryption algorithm.

User data to be sent to the destination network, for example, for the purpose of off-site data backup, is sent from user computing devices, which may be workstations, servers or laptops, to the data port arrangement on the source network. While bespoke software, firmware and/or hardware may be used to facilitate this transfer, there are significant advantages transferring data using simple operating system utilities like the "mapped drive" file share facility. By using the data port arrangement, operating system facilities may be used to transfer data to and from a destination network.

When the "mapped drive" facility is used, one port on the data port arrangement is configured as a mapped drive proxy. That is, on user computing devices the IP address of this port is configured as a mapped drive. Should a different facility or software application be used on user computing devices, a port on the data port arrangement would similarly be configured to support its method of connection with user computing devices. Using a mapped drive, users send data to the destination network by moving it manually or automatically, using utilities or software, into the mapped drive that is configured on their computing device. The "mapped drive" communication between user computing devices and the data port arrangement may use a TCP Internet suite protocol data connection using the Internet socket port 445, the standard for mapped drive connections.

The data port arrangement may contain no memory or other mechanism for data storage: it does not necessarily need to store the user data sent to it. The data port arrangement may be configured to extend the mapped drive connections from many user computing devices through the encrypted tunnel, established with the destination network, to the receiving device on the destination network, which might be a data disk, for the purpose of off-site data backup. In effect, by extending the connection, the mapped drive association exists between the user computing devices on the source network, and the device on the destination network to which the data is being sent.

Because this methodology uses a standard facility for managing the transfer of data to a remote disk, like the "mapped drive" for example, the data port arrangement will support many connections between user computing devices and the destination device on the destination network.

Data communication is initiated from user computing devices on the source network using a software application or applications that may be installed on both the user computing devices on the source network and the destination device on the destination network. Data communication is achieved using one or more data connections each using a specific protocol and socket port number. Once data communication has been established, depending on the application, user data (information) may flow in either or both directions. For example, under the management of the mapped drive utility, data may be backed up from the source network to the destination network. Under the management of a web browser on a user computing device on the source network and a web server on the destination network, information (data) browsed from the web server may flow from the destination network to the user computing devices on the source network. In both these examples the function of the data port arrangement is the same in that it receives data communication connections initiated from user computing devices on the source network and thereafter facilitates the passage of information between the source and destination networks.

This method may use a specifically configured device, the data port arrangement, to receive data from many user computing devices using a standard operating system facility, encrypt it and send it through an un-trusted network to a receiving device on the destination network. The simplicity of this implementation lends itself to many advantages, a number of which are described below.

### Advantage 1

This invention better protects user data, when it is transiting an un-trusted network, against electronic theft or compromise by better protecting the encrypting device.

Known methods transfer user data between two networks through an encrypted tunnel established between the external network routers of the source and destination networks. The external network router is normally the firewalled router that protects a local area network (LAN) from an un-trusted network like the Internet. The external network routers are configured to connect to each other and using the encrypted tunnel between them, encrypt and decrypt the data sent between them.

Because an external network router is the physical interface with the un-trusted network, it receives electronic hacking attempts to gain access to the LAN. Hence the same device that directly defends a LAN against electronic attack also contains unencrypted user data awaiting encryption before being sent through the encrypted tunnel to the destination network.

The weakness of this method is that the same device that contains unencrypted user data is also the recipient of electronic attack from the un-trusted network.

The present invention uses a data port arrangement to encrypt user data to be sent to the destination network. The data port arrangement is a device that is installed on the LAN like other network devices such as workstations and servers. Because it is part of a LAN, the data port arrangement is in a relatively safe environment protected from electronic attack from the un-trusted network by the external network router.

A data port arrangement on the source network establishes an encrypted tunnel with a network device such as a router on the destination network, which is similarly protected being part of the destination LAN. Hence, user data is encrypted in a secure environment and transits to the destination network device through the external network routers in an encrypted form, before being decrypted in a secure environment.

Using this invention, user data is encrypted and decrypted in secure environments. Unencrypted user data is not present in any device that may be subject to direct electronic attack from an un-trusted network ensuring it is better protected.

### Advantage 2

This invention protects user data from electronic theft or compromise by better protecting the encryption process.

Some known methods use a software application to encrypt user data. Once encrypted, user data is sent to the destination using standard, or application specific, methods without further protection. Therefore, the protection of the user data is dependent on the strength of the security the application uses to protect the data encryption process.

User computing devices, like workstations and servers, are not normally whole disk encrypted. Elements of the encrypting process can exist unencrypted on the user's computing device. Being unencrypted, these elements are susceptible to discovery by electronic theft, which may include the use of viruses or hacking. For this and similar reasons, to protect the data on them, laptops, which are at a higher risk of theft, are normally whole disk encrypted.

Such software encryption applications are normally commercially available. Elements of the encrypting process and other encrypting paraphernalia may be discovered by analysing and testing these applications. Once discovered, methods of electronic theft may be devised to obtain these elements on computing devices and thereafter obtain key encrypting information. With key encrypting information, encrypted user information in transit or at rest may be unencrypted and compromised.

Using the present invention, user data to be transmitted to a destination network is encrypted by a data port arrangement. The data port arrangement preferably encrypts user data using volatile encryption keys that change dynamically. It is configured specifically for security and to protect user data and the encrypting process. Preferably, no user, or software application, has access to a data port arrangement.

This invention better protects user data from the risks associated with weaknesses in encrypting processes.

### Advantage 3

The present invention may ensure that the quality of encryption used to protect user data, to be transmitted to the destination network, is not restricted by limited computing device resources.

Software applications require significant computing resource, such as memory and processing power, to encrypt user data. If the process uses too much resource, the user's computing device is impaired and unable to perform other user functions. Encryption software vendors overcome this by limiting their applications need for resources by restricting the quality of encryption they use.

By using this invention user data is encrypted by a data port arrangement which need not use the resources of user computing devices nor limit their operation. Moreover, the quality of encryption used is limited only by the computing power of the data port arrangement.

### Advantage 4

The present invention may use a method for transferring data securely to a remote network that requires less maintenance than other methods which use software applications.

Software applications need to be managed. They need to be installed on each computing device from which data is to be transferred. Such software is often licensed and expensive. Time is needed to install applications and configure them and users might require training in their function. Also, being for a small market, the applications may not be fully supported and problematic.

The present invention may use a methodology that uses standard functions and facilities for data transfer and other applications, like the mapped drive, which are found in most operating systems. Being provided as standard within an operating system, the facilities do not require additional licensing or incur further expense, and use programming code which is mature and therefore likely to be error free. The mapped drive utility, for example, can be used by the majority of software applications and computing devices because it is a standard operating system facility.

Because this invention may use standard operating system functions and facilities, it may therefore be more easily and reliably implemented. Additional software applications may not be required and the associated overheads with them not incurred.

### Advantage 5

The present invention uses a methodology that may enable an unlimited number of users to transfer valuable business data off-site without the need for dedicated software applications or hardware.

Often a software application or a hardware device needs to be installed on a user computing device so that it is enabled to transfer data off-site. The associated costs of doing this can be prohibitive. As a result, the number of computing devices enabled to transfer data off-site is normally limited. Most user computing devices hold data of varying importance. If not backed up off-site some user data may be irrecoverable after a catastrophic event.

The present invention may facilitate the off-site transfer of user data from an unlimited number of user computer devices. User computing devices may not need additional software or hardware. Therefore, the ability to backup data off-site can be made available to many more user computing devices, improving a business's resilience to a potentially catastrophic event.

### Advantage 6

The present invention may facilitate the transfer of data off-site irrespective of the type of data file.

Many known software applications that manage and secure the transfer of user data off-site are limited to specific types of file. The present invention may use a standard operating system facility, like the mapped drive, to transfer user data from user computing devices to the data port and then to a destination network. Operating system facilities such as these, which manage the transfer of data files, are not restricted to file types.

Because this invention may use a standard operating system facility in the process to transfer data off-site it is not limited to specific file types.

The data to be sent to the destination device which is encrypted by the data processing arrangement of the data port arrangement and outputted by its output port includes the address, direct or indirect, of the destination device.

The address of the destination device as referred to herein is an address which is used in the destination network to ultimately route the data to the destination device. It may directly identify the address of the destination device, or may identify it "indirectly" by representing an address which is changed in the destination network, so as to "re-route" the data so that it reaches the appropriate address for the destination device.

Preferably, for off-site data transfer, the data port arrangement is configured to receive a mapped drive connection from the computing device.

This provides users the ability to access and recover data from the device on the destination network immediately.

The mapped drive facility may be used to manage the transfer of data from user computing devices to a device on the destination network. Data can be moved to a mapped drive and from it. To recover data immediately, the user simply needs to access the mapped drive configured on their computing device and move data manually, or by a bespoke software application or utility, from the mapped drive back to their user computing device. The amount of data and how quickly it can be recovered depends on the size of the data bandwidth available.

By using this embodiment, user data stored on a device on a remote network can be recovered quickly and easily.

The data processing arrangement of the data port arrangement may be configured to encrypt the data using volatile encryption keys. A volatile encryption key exists for a short period of time before being superseded, to reduce the risk of the key being compromised.

The data processing arrangement of the data port arrangement may be configured to encrypt the data using IPsec encryption protocols.

The data processing arrangement may be configured to store the IP addresses associated with a destination network.

The IP address of the input port of the data port arrangement and/or the IP address of its output port may be programmable.

The input port of the data port arrangement is preferably an Ethernet port programmed with an IP address, which is the destination address included in the data packets from the computing device on the source network. The IP address of the input port may be within the range of addresses associated with the source network.

The output port may be an Ethernet port programmed with an IP address. The IP address of the output port may be within the range of addresses associated with the source network.

The data port arrangement is preferably configurable to use different Internet socket ports. It may be configured to use a non-standard Internet socket port number to transmit data to the destination device. More particularly, it may be configured to use an Internet socket port number for a specific use that does not conform to the Service Name and Transport Protocol Port Number Registry.

Software applications that are used to manage and secure the transfer of user data off-site are commercial and easily acquired. Usually they are generic and connect to a destination network which is configured to accept many connections. There is little opportunity to manipulate their configuration to use non-standard parameters for data communication. As a result, they can be analysed and tested to determine the Internet suite protocols and ports they use to perform their function. Accordingly, they are easier to "hack" for the purpose of intercepting user data.

The data port arrangement can be a highly configurable device that can be configured to use non-standard Internet socket ports. Using non-standard ports it is easier to disguise the transmission of user data to a destination network.

Because this invention uses a configurable device rather than an un-configurable software application, deception may be used to protect user data.

The data port arrangement may be configured to only receive data from the source network from at least one predefined computing device on the source network.

More particularly, the data port arrangement may be configured to only receive data packets from at least one predefined computing device using at least one predefined data protocol and Internet socket port.

The IP address of the data port arrangement may be configured as a mapped drive on the computing device of the source network.

The source network may include a source network router communicatively coupled between the external network router and the data port arrangement, and between the computing device and the data port arrangement.

The IP address of the source network router may be configured as a mapped drive on the computing device, with the source network router configured to forward data packets directed to the mapped drive onto the data port arrangement.

In a preferred embodiment, the source network router is configured to only permit the data port arrangement to communicate with the external network on at least one predefined Internet socket port and predefined Internet suite protocol.

In a further variation, the source network router is configured to only permit the data port arrangement to communicate with at least one predefined computing device on the source network.

According to another preferred embodiment, the source network includes a source network router communicatively coupled between the external network router and the data port arrangement, wherein the data port arrangement is communicatively coupled between the computing device and the source network router.

In this embodiment the IP address of the data port arrangement may again be configured as a mapped drive on the computing device of the source network.

The source network may include a further computing device(s) communicatively coupled to the source network router without the data port arrangement communicatively coupled between it and the source network router.

In further variations, the source network embodiments described herein may include one or more further computing devices communicatively coupled to the external network router without the data port arrangement communicatively coupled between it and the external network router.

A source network as described herein may include a plurality of data port arrangements.

By using multiple data port arrangements there is in principle no practical limitation to the amount of encrypted data that may be sent from the source to the destination network, or the quality of encryption used to protect that data.

Data port arrangements, like other devices, have a maximum capacity for encrypted data throughput. This capacity can be increased if less capable encryption is used. Because each port on a data port arrangement can be individually configured with a selected IP address they act independently. Accordingly, there is no limit on the number of data port arrangements that may operate on one network. Therefore, when using data port arrangements, there is also no limit to the amount of encrypted data that may be passed between the source and the destination networks (if there is more than one destination network) or the quality of the encryption used. For example, if using the best encryption available leads to a lower than needed data throughput using one data port arrangement, a second data port arrangement can be added to the network to provide a second channel to the destination network to achieve the required throughout.

To support the operation of more than one data port arrangement on the same source network it may be necessary to configure each to use a different Internet socket port for the transmission of its encrypted tunnel to the destination network's external network router. For example, data port arrangement 1 may transmit its encrypted tunnel on UDP port 5030, while data port arrangement 2 on UDP port 5031. It may also be desirable to place two or more data ports in separate sub-networks of the source network.

The present invention further provides a data transfer system comprising a source network as described herein and a destination network for receiving encrypted data sent from the data port arrangement, the destination network comprising:
a destination-external network router for connection to an external network;
a destination device; and
a gateway router communicatively coupled between the destination-external network router and the destination device and comprising:
   a router input for receiving the encrypted data via the destination-external network router;
   a router data processing arrangement for decrypting the data; and
   a router output for outputting the decrypted data for transmission to the destination device.

Preferably, an encrypted tunnel is provided between the external network router of the source network and the external network router of the destination network. In this case, the data, the computing device address and destination device address in the data packets sent in the encrypted tunnel established between the data port arrangement and the gateway router may be authenticated. The authentication may be provided using Authentication Headers according to the IPsec protocol.

Preferably, the destination-external network router, the destination gateway router and the destination device are implemented as separate, network interconnected physical devices, to provide layers of security to reduce the risk of unencrypted data being exposed to attack from an un-trusted network. However, in embodiments of the invention, their functions may be implemented using just one or two separate physical devices. For example, the functions of the destination-external router and the gateway router may in practice be carried out by a single device. Similarly, in other embodiments, the functions of the gateway router and the destination device may be implemented in one physical device. Alternatively, the functions associated with the destination-external network router, the destination gateway router and the destination device may all be carried out by one physical device. Alternative combinations of physical devices may require associated changes in data packet routing to maintain the three desired functions optimally provided as separate devices by the destination-external network router, gateway destination router and the destination device. In general, the operations associated with these components of the destination network as described in this specification may be carried out using one or more physically separate devices, with the configuration used selected to suit the user's requirements.

According to another aspect, the present invention provides a method of transmitting data from at least one computing device on a source network to a specific destination device outside the source network via a source-external network router on the source network and an external network communicatively coupled to the source-external network router, wherein the data from the at least one computing device is in a data packet including a destination address associated with a data port arrangement on the source network, the method comprising the steps of:
transmitting the data packet from the at least one computing device to an input port of the data port arrangement;
processing the data packet with the data port arrangement to replace the destination address with the address of the destination device and to encrypt the data to be sent to the destination device; and
transmitting the encrypted data from the data port arrangement only to the destination device via the source-external network router and the external network.

According to a further embodiment, the transmitted data payload in the data packet may represent a request for data from the destination device, and the method includes the further steps of:
retrieving the requested data from the destination device; and
transmitting the requested data from the destination device to the at least one computing device on the source network via the source-external network and the external network router on the source network.

A method of receiving encrypted data sent from a data port arrangement to a destination network is disclosed, wherein the destination network comprises:
a destination-external network router for connection to an external network;
a destination device; and
a gateway router communicatively coupled between the destination-external network router and the destination device,
the method comprising the steps of:
receiving the encrypted data in the gateway router via the destination-external network router;
decrypting the data using the gateway router; and
transmitting the decrypted data from the gateway router to the destination device.

According to a further aspect, the present invention provides a method of transferring data to at least one computing device on a source network from a destination device outside the source network, the method comprising the steps of:
allocating the destination device the IP address of the input port of the data port arrangement;
substituting the data port arrangement with the destination device; and
transmitting data from the destination device to the at least one computing device.

According to methods embodying the present invention, very large amounts of data may be readily pre-loaded to and recovered from a destination device. The function of the data port arrangement is to extend data connections from user computing devices on the source network, through an un-trusted network, to a destination device on a destination network. Because the data port arrangement acts only to extend the connection, it can be replaced seamlessly on the source network by the destination device itself and all data connections with user computing devices remain intact. To replace the data port arrangement with the destination device, the destination device needs only to be configured with the IP address of the input port of the data port arrangement it replaces. Once the destination device is installed on the source network user data may be accessed, uploaded to it and downloaded from it at local network speeds.

The simplicity of the substitution ensures that substantial amounts of user data can be recovered very quickly and, if needed, the destination device can be first installed on the source network to preload significant quantities of data before being substituted by the data port arrangement and installed on the destination network.

### Brief description of the drawings

Embodiments of the invention will now be described by way of example and with reference to the accompanying schematic drawings, wherein:
Figure 1 is a diagram of a system embodying the invention including a data port on a source network coupled to a destination network;
Figures 2 to 4 are diagrams of further systems embodying the invention including different source network configurations;
Figures 5 and 6 are diagrams illustrating data flow between a user computing device on a source network and a destination device on a destination network via respective network routers in a known manner; and
Figures 7 to 10 illustrate data flow between a user computing device on a source network and a destination device on a destination network in accordance with embodiments of the invention.

The same reference signs are generally used to refer to corresponding or similar features in different embodiments.

### Detailed description of the drawings

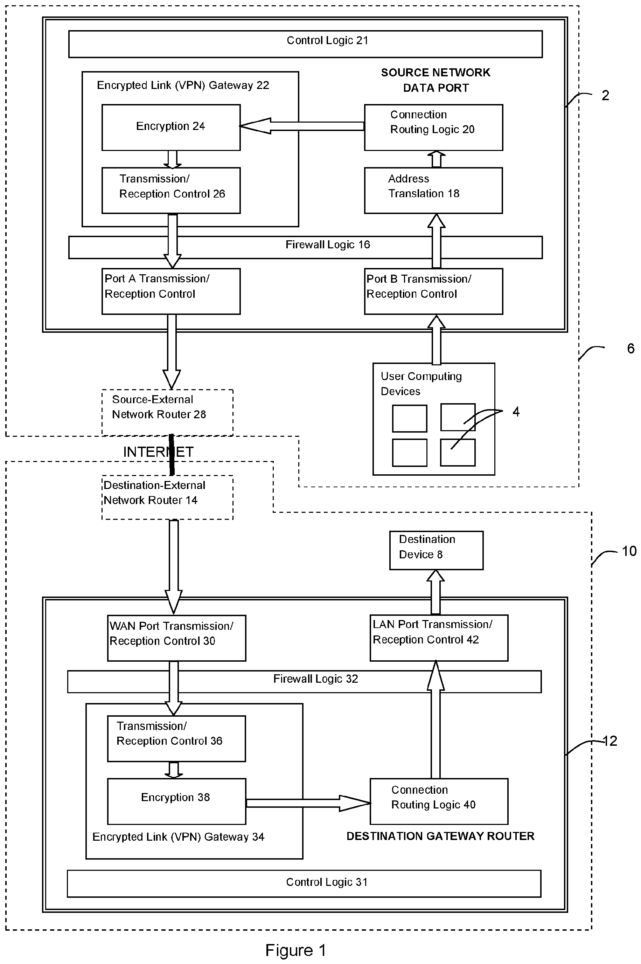

The generic function of the data port and how it interacts with other devices to transfer data securely to a destination network will now be described with reference to Figure 1. Where appropriate, reference may be made to Internet suite protocols of the transport and application layers, and to Internet socket port numbers used in network-based data communications.

The function of the data port 2 is to extend data connections from user computing devices 4, on a source network 6, through an encrypted tunnel, to a destination device 8 or devices on a destination network 10 for the purpose of transferring data from one to the other.

The form of the data connections depends on the software application, firmware and/or hardware that is used to manage the data transfer. The software application may be bespoke, generic or standard operating system functions. User data may flow in either direction. The data communication used by the software uses one or more data connections which each consist of an Internet Suite protocol and socket port, for example, Transmission Control Protocol (TCP) port 445. Each will have a specific function.

The data port consists of standard Ethernet ports that can be programmed with selected IP addresses and are each capable of operating independently as if they were discrete network devices.

The various data processing and logic functions performed by the data port are represented schematically in Figure 1 for the purposes of illustration. It will be appreciated that these functions may be implemented by means of a computer program, provided in the form of software installed on the data port (which may be any suitable computing device), by firmware or by hardware as integrated circuitry.

In the embodiment of Figure 1, the operation of the data port 2 is governed by control logic 21. User computing devices 4 are coupled to Port B of the data port via an Ethernet network, using cable or wireless link connections. Data packets from Port B pass through firewall logic 16 and are received by address translation logic 18. The data packets are then directed to connection routing logic 20, which forwards the data packets to the encrypted tunnel (or encrypted link) gateway 22. This gateway includes encryption logic 24 and transmission/reception control logic 26.

Data packets to be transmitted along the encrypted tunnel are sent from transmission/reception control logic 26, and outputted from the data port via Port A, via an Ethernet link, to the source-external network router 28. The router 28 directs the data packets via an external, untrusted network such as the Internet to the destination-external network router 14.

The destination-external network router 14 sends data packets received via the encrypted tunnel to the destination gateway router 12. The operation of the gateway router is governed by control logic 31. Data is inputted via the WAN port 30 of the gateway router, passing through the firewall logic 32 to the encrypted link gateway 34 of the gateway router. Like the gateway 22 of the data port, destination gateway 34 includes transmission/reception control logic 36 and encryption logic 38. The decrypted data is directed via connection routing logic 40 and the LAN port 42 of the gateway router to the destination device 8.

To extend data communication from one network to another, the data port 2 receives data connections from user computing devices 4 on the source network. The data port's firewall logic allows connections only from authorised user computing devices and only using the correct data protocols and ports.

The data connections are managed by a software application that is installed on the user computing devices 4 and the destination device(s) 8. Data packets are sent from the user computing devices to the data port over the data connections. Each packet has a destination IP address of the Ethernet port on the data port to which it is being sent.

The destination address of the received data packets is changed by the data port's address translation logic 18 from the IP address of its Ethernet port to that of the IP address of the destination device 8 on the destination network 10. This action extends the data connection from user computing devices to the destination device. The destination IP address of the data packets transmitted to the user computing device from the destination device, using the return path of the data connections, is that of the user computing device to which it is sent.

An encrypted tunnel is configured between the data port 2 and a gateway router 12 on the destination network. An encrypted tunnel may be configured several ways, so long as the tunnel is resilient and provides the means to protect user data, using encryption, sent between the two devices. Data from user computing devices is encrypted within the encrypted link gateway logic 22 and then transmitted to the destination gateway router 12.

To establish the encrypted tunnel, the data port establishes a security association with the gateway router 12. The destination address for the exchange, from the data port is the WAN IP address of the destination-external network router 14, which is configured to forward the connection to the WAN IP address of the gateway router. The return path is established automatically.

As part of the standard configuration of an encrypted tunnel, the data port is configured with the IP address range of the destination network accessed through it. Accordingly, the data port's routing logic 20 is aware that data packets with a destination address within the IP address range of the destination network must pass through the encrypted tunnel. Accordingly, data packets that have a translated IP address which is now that of the destination device, which is within the IP address range if the destination network, are routed through the encrypted tunnel.

As described previously, the destination-external network router 14 is configured to forward the encrypted tunnel connection to the WAN port of the gateway router 12. The gateway router functions in the same way as a standard router. The encrypted tunnel is received by the gateway router's encrypted link gateway logic 34, where it is decrypted into data packets.

The routing logic 40 of the gateway router recognises that the destination IP address of the data packets is present on its LAN ports and routes it accordingly.

In summary, the data port receives the data connections established by software, firmware and/or hardware installed on user computing devices, that manages the transfer of data between locations on two different networks and extends them through an encrypted tunnel to a destination device on a destination network.

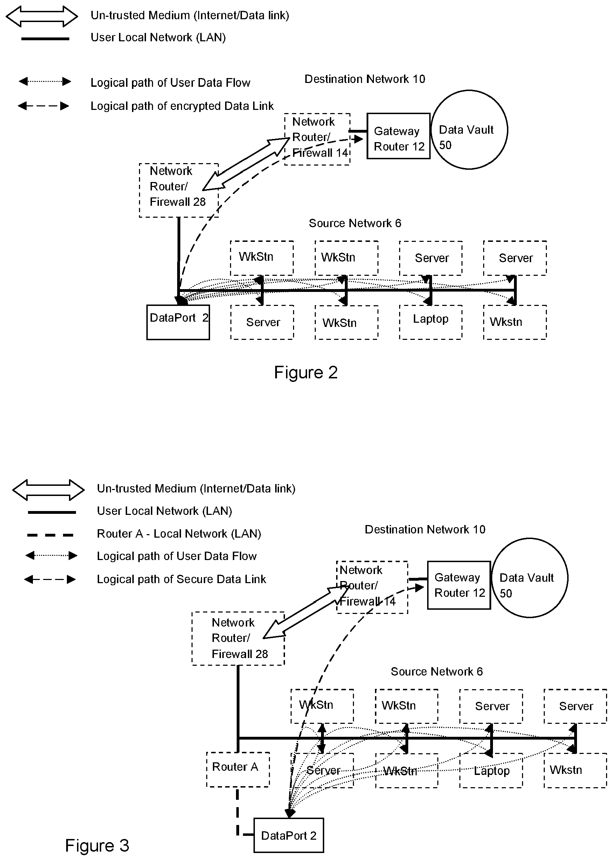

Further embodiments of networked systems will now be described with reference to the network topologies shown in Figures 2 to 4.

In the embodiment of Figure 2, the source network 6 comprises a local area network (LAN) of user computing devices 4. In the example illustrated, this network includes servers, laptops and user workstations (labelled "WkStn"). Each user computing device is coupled to the source network via router 28 using standard network devices and links (not shown). The computing devices are coupled to a data vault 50 on the destination network via an encrypted tunnel of the form described here (although not all computing devices on the network may make use of this tunnel).

The data port 2 is connected twice to a network device (not shown) on the source network 6, using two Ethernet cables connected in parallel. Each of the Ethernet cables connects one port on the data port with one port on the network device. In this example Port 1 and Port 3 of the data port are each connected to the device. Each of the connections supports one of the data port's two main functions: to provide an encrypted tunnel with the destination network and to receive data from user computing devices. Each port on the data port operates at a data rate of 1000Mbps but would function equally well at other data rates.

As an integral part of the LAN, each of the ports on the data port is configured with its own LAN IP address and details of the subnetwork and router 28 in the same way as other network devices. The data port interacts with the Internet, through the router 28, to send and receive information it needs to complete its functions; for example, timing from a network time protocol (NTP) server (not shown).

In this example, Port 1 of the data port is configured to facilitate an IPsec encrypted tunnel with the gateway router 12 on the destination network 10. The IPsec tunnel is established through the un-trusted network. While normally an IPsec tunnel is established using the User Datagram Protocol (UDP) on Internet socket port 500, this data port is configured to facilitate an IPsec tunnel (via boundary routers 28 and 14), to the gateway router 12, using port 5030, although the return path uses port 500. After the IPsec encrypted tunnel has been established, the tunnel automatically transfers to use the UDP protocol on Internet suite port 4500, which is the standard port used to connect an IPsec tunnel through a network address translation (NAT) interface.

Port 3 of the data port is configured to receive data communication from LAN user computing devices using the TCP protocol on Internet suite port 445. This is the standard protocol and port used to connect file shares: the mapped drive. Port 3 is configured to receive these connections from any number of user computing devices on the LAN.

Internally, the data port is configured on Port 3 to receive "mapped drive" connections from user computing devices and forward each through the encrypted tunnel it has established with the gateway router 12, to the data vault 50 for the purpose of off-site data backup. On the user computing devices, the IP address of Port 3 of the data port is configured as a mapped drive. For incoming connections, the data port translates the IP address of its Port 3 to that IP address used by the data vault on the destination network. This extends that mapped drive connection from the user computing device to the data vault on the destination network. While on a user computing device, the mapped drive is configured to use the IP address of Port 3 of the data port, and it is configured to use the user name and the password of the "share" drive on the data vault. The data port is configured with the necessary information to facilitate this extension including the IP address range of the destination network and the data vault's IP address. In this example, the data port receives timing information from a network time protocol server to help synchronise it with the destination gateway router to maintain the encrypted tunnel.

On the user computing device, the data that is to be sent to the data vault is copied or moved, manually or by an application to the mapped drive that represents it. Data so mapped, is sent to the data port then through the encrypted tunnel to the receiving gateway router and then to the data vault on the destination network.

In this example, the data port implements data communication using a small set of protocols and Internet socket ports between defined network addresses to conduct its function. The data port can be secured to prevent all other protocol and port data communication rendering it extremely secure.

When the data port is a highly configurable device it can be programmed to undertake data communication using non-standard ports as a means of deception. This was illustrated in this example by establishing an IPsec tunnel with the destination gateway router using the UDP protocol on port 5030 instead of port 500.

This example uses the mapped drive facility to manage the transfer of data. The mapped drive is a very common utility that is available on most operating systems and capable of managing all data types. As a result, this implementation is simple and flexible and therefore very powerful.

Figure 3 shows an embodiment similar to that of Figure 2, with the differences detailed below.

In Figure 3, the data port 2 is connected to the LAN side of a second router, Router A, which is connected to the user's LAN via its WAN port. The data port is twice connected to Router A.

The WAN port of Router A is configured with an IP address within the range of the user's LAN. The two ports on the data port are each configured with an IP address from the IP range used by Router A for its LAN.

For this example, user computing devices configure the WAN IP address of Router A as a mapped drive. Router A forwards data it receives on its WAN port using TCP port 445 to Port 3 of the data port. Thereafter, the data port extends the mapped drive connections through the encrypted tunnel to the data vault 50.

As in Figure 2, the data port establishes an IPsec encrypted tunnel with the gateway router 12 on the destination network 10. In this configuration Router A forwards the IPsec tunnel from the source network data port to the destination network gateway router 12. The Internet suite protocols and ports used remain the same although port translation may be used to change these if required.

By using Router A, the security of the data port is enhanced. Router A may be configured to ensure that the data port communicates only with the Internet on specific ports and protocols and only with the specified user computing devices on the user's LAN. Both these measures reduce further the data port's susceptibility to an electronic attack, even from the user's LAN and, if necessary, further improves the user's confidence that the data port functions as specified.

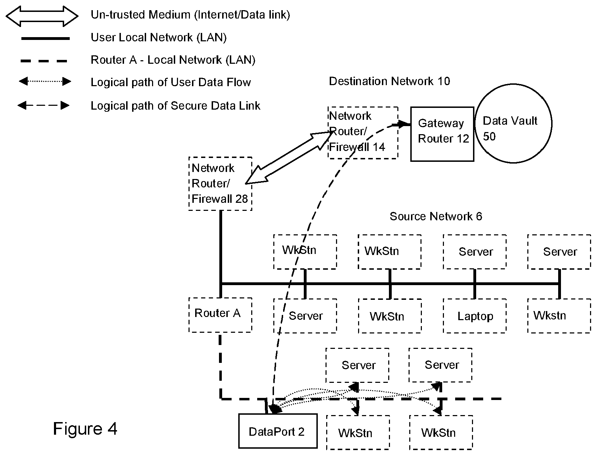

Figure 4 illustrates a further variation with the differences detailed below.

The data port 2 and the user computing devices that send data to the data vault 50 through it are connected to the LAN ports of Router A, in their own subnetwork. The WAN port of Router A is connected to the main user LAN along with the user computing devices that do not send data to the data vault.

Port 1 and port 3 of the data port are each configured with IP addresses from Router A's LAN subnetwork. The data port establishes an IPsec encrypted tunnel with the gateway router 12 on the destination network.

The user computing devices on the same subnetwork as the data port have the IP address of Port 3 of the data port configured as a mapped drive and communicate with it using the TCP protocol on Internet suite port 445 which is used to connect file shares. The data port extends the mapped drive connections from user computing devices to the data vault located on the destination network.

For this embodiment, only user computing devices on the same subnetwork as the data port 2 may connect to it and send data to the data vault 50 on the destination network 10. This implementation provides added security, protecting the data port from user computing devices that do not need access to it. This example is suited to an implementation where one subnetwork on the source network is segregated from another for the purpose of security or confidentiality.

In preferred embodiments the device that is configured to be a data port is a Mikrotik RB450G. Mikrotik provides a number of devices that are capable of being configured as data ports.

In one implementation, the source network's IP address range is 192.168.15.1 to 192.168.15.255, which provides 254 usable IP addresses. Port A of the data port is configured to use the IP address 192.168.15.245, while Port B is configured to use 192.168.15.249. The IP address of the destination device on the destination network is 192.168.16.199, for example.

Preferably, the software application used to manage the transfer of data is the standard operating system "mapped drive" facility. To configure a mapped drive on a user computing device, the IP address of the device, the logical name of the shared drive it contains and its logon credentials are needed. The "mapped drive" facility software uses a single data connection that may use the Internet Suite protocol TCP on port 445.

Because the function of the data port is very specific, its firewall is configured to allow data flow only between specified IP addresses and only using the specified Internet Suite ports and protocols. This restricts the data port to its intended function only. In this example, the firewall will allow connections from user computing devices that have an IP address within the range 192.168.15.1-255 using only the Internet Suite protocol TCP and port 445. In addition, the firewall has been correctly configured to enable the following functionality.

The following describes the main functions of a data port with reference to the implementation example outlined above. Some ancillary functions like the receipt of timing information from an NTP server have not been described in detail, although they have been summarised below.

On each user computing device, a mapped drive has been configured using the IP address of Port B of the data port, the name of the "share" drive on the destination device, and its logon credentials.

Once the mapped drive is configured on user computing devices, they establish a data connection with Port B of the data port using the TCP Internet Suite protocol on port 445. The data port is configured to receive data packets from this data connection and translate their destination IP address from that of Port B to that of the destination device. In this example, the destination IP address of data packets is translated from 192.168.15.249 to 192.168.16.199. This extends the mapped drive data connection from user computing devices to the destination device on the destination network.

The data port is configured to provide an encrypted tunnel with the destination network's gateway router using the IPsec protocols. Its configuration on the data port includes detail of the destination address, which is the WAN IP address of the destination network's boundary router and detail of the IP address range of the destination LAN, which is reached through the encrypted tunnel, this being 192.168.16.1-255. Moreover the data port is configured to transmit an encrypted tunnel data connection using the non-standard Internet Suite port of UDP 5030 instead of UDP port 500, which is the standard port for IPsec. Configured this way, the data port sends data packets from the source network with a destination IP address of the destination network (LAN) through the encrypted tunnel. To establish the encrypted tunnel, other standard parameters may be configured on the data port and repeated on the gateway router on the destination network with which the encrypted tunnel is established.

The data port performs several ancillary functions that are needed to support its main function. More such functions may be required depending on the device configured to function as a data port. The data port is configured to receive timing information, essential to the function of an encrypted tunnel, from several NTP servers. It transmits a ping response to the destination device to help detect a link failure, which initiates restoration measures, and it is configured to transmit status information.

Network configurations embodying the present invention may enable a user on a source network to securely browse a website on a destination network. In this approach, the data vault 50 on the destination network becomes a web server. User computing devices on the source network connect to port B of the data port 2, using the TCP protocol on port 80, which is reserved for the Hypertext transfer protocol (HTTP), the standard method of connection to a web server. The data port is then operable to extend the data connections from user computing devices to the web server. Users are able to access the website by browsing to the IP address of port B of the data port.

In a further embodiment, users on the source network may securely access a File Transfer Protocol (FTP) server on the destination network. In this case, the data vault 50 becomes an FTP server. The user computing devices on the source network connect to the data port 2 using the TCP protocol on port 20, which is reserved for FTP. The data port then extends the data connections from the user computing devices to the FTP server. The users access the FTP server using an appropriate application to navigate to the IP address of port B of the data port.

### Functional Differences between the data port and a router

A Router is a boundary device that interfaces two networks, for example a WAN and a LAN. Its primary role is to manage connections from the LAN to the WAN and vice-versa. The data port is a device that extends a data connection from user computing devices on a source network to a destination network through an un-trusted network. The following describes the features a data port requires that cannot be configured in a Router.

To work seamlessly on the source network, Port A on the data port, from which the encrypted tunnel data connection emanates, must use an IP address from the same IP address range as the source network. Routers can be configured to provide encrypted tunnels from their WAN ports only which use different IP address ranges to their LAN ports.

To extend a data connection a data port receives data packets from user computing devices and translates the destination address to that of the destination device on the destination network. Address translation is applied to data packets from the local, source network which transit outbound through the encrypted tunnel. As standard a router can be configured to translate the destination address of inbound data packets only and only from the WAN.

The ports on the data port are individually programmable with IP addresses enabling them to function independently as if they were discrete devices. The ports on a switch or hub, and therefore the LAN ports on a router, cannot be programmed with individual IP addresses and cannot act independently. Because the ports on a data port operate independently there is no restriction on the IP addresses that can be used or the number of data ports that may operate on one network.

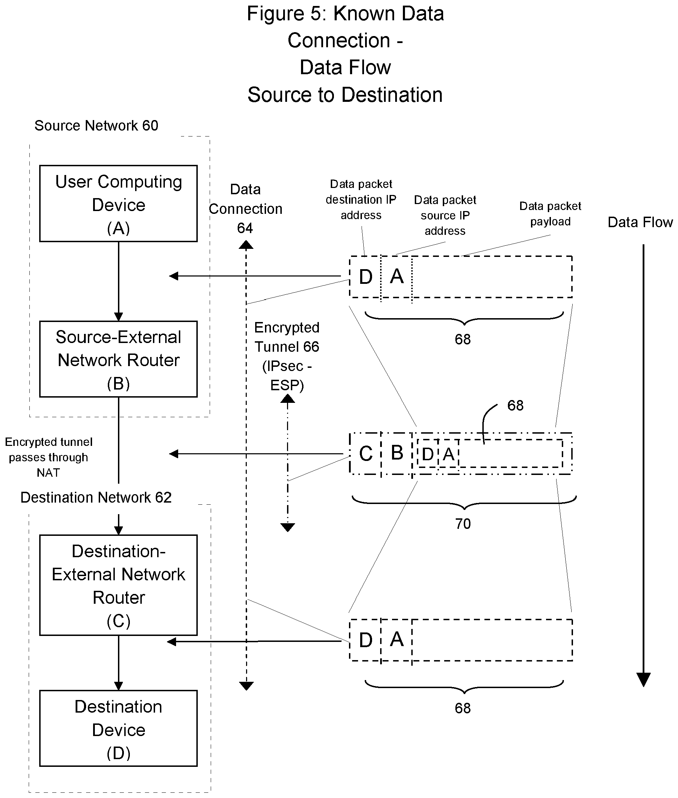

The way in which data may be transferred between two networks using a known router configuration will now be compared with embodiments of the invention with reference to Figures 5 to 10 of the drawings.

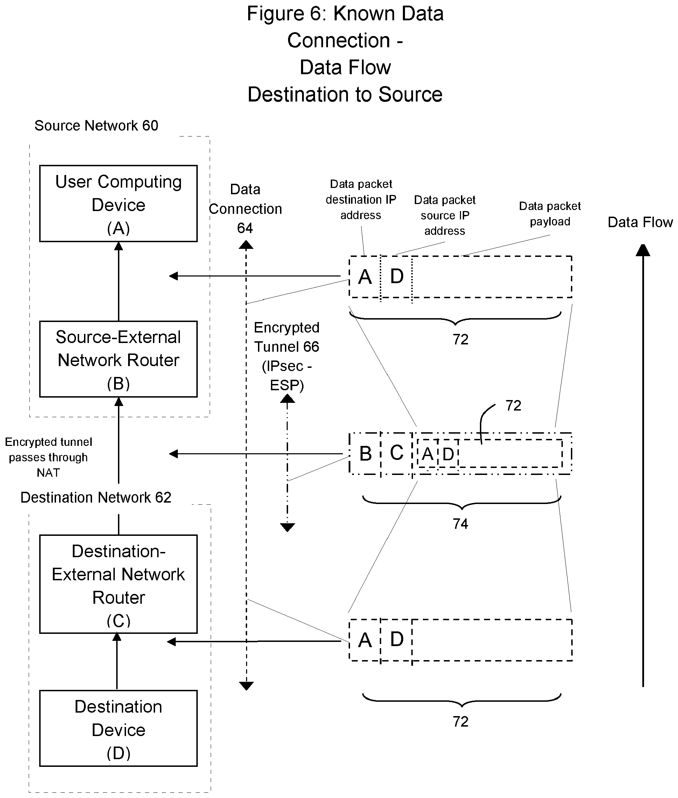

In the known configurations of Figures 5 and 6, data is transmitted from a user computing device on a source network 60 in Figure 5 to a source-external network router on the source network. The router sends the data to a destination-external network router on a destination network 62 via an untrusted external network. The destination-external network router then forwards the data on to the destination device on the destination network. In this way, a data connection 64 may be established between the user computing device and the destination device. The connection between the source-external network router and the destination-external network router may be configured as an encrypted tunnel 66.

In Figures 5 and 6, the IP address associated with the user computing device is denoted "A" and similarly the IP addresses of the source-external network router, destination-external network router and destination device are denoted "B", "C" and "D", respectively.

Each data packet 68 to be sent from the user computing device to the destination device via the data connection 64 comprises three components, as illustrated in Figure 5. The IP address of the destination device is given, together with the IP address of the source device, namely the user computing device. The data to be transmitted forms the "data packet payload".

In the source-external network router, the data packet 68 becomes the encrypted payload of an augmented data packet 70. Packet 70 also includes the IP address of the destination-external network router and that of the source-external network router. Data packet 70 is then sent to the destination-external network router, where the data packet 68 is decrypted from data packet 70 and forwarded on to the destination device.

Figure 6 illustrates the use of the same known configuration of Figure 5 to send data from the destination device to the user computing device, for example in response to a request received from the user computing device. In a similar manner, data packet 72 from the destination device is augmented and encrypted by the destination-external network router, and then the data packet is decrypted from the augmented data packet 74 by the source-external network router for forwarding on to the user computing device.

The encrypted tunnel 66 established between the source-external network router and destination-external network router may for example secure data packets using the Encapsulating Security Protocol (ESP) protocol of the IPsec protocol suite. ESP encrypts and authenticates the data packets' payload. The data packets undergo network address translation (NAT) in the source and destination network routers ("the boundary routers"). NAT changes the destination and source IP addresses of the data packets before they pass from the source or destination network LANs to the untrusted network ("the WAN").

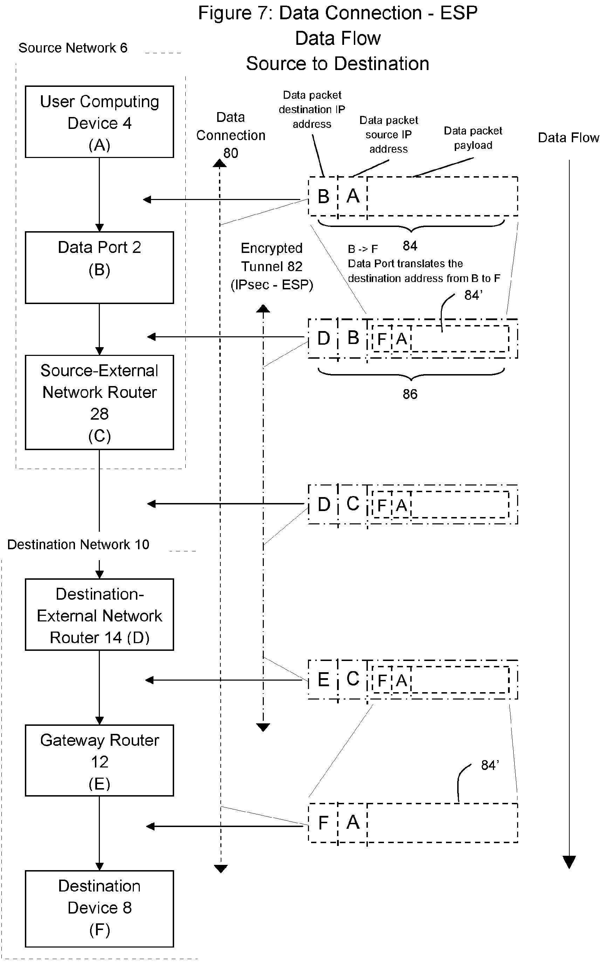

In Figures 7 to 10, the IP addresses of a user computing device 4, data port 2, source-external network router 28, destination-external network router 14, gateway router 12 and destination device 8 are denoted A to F, respectively.

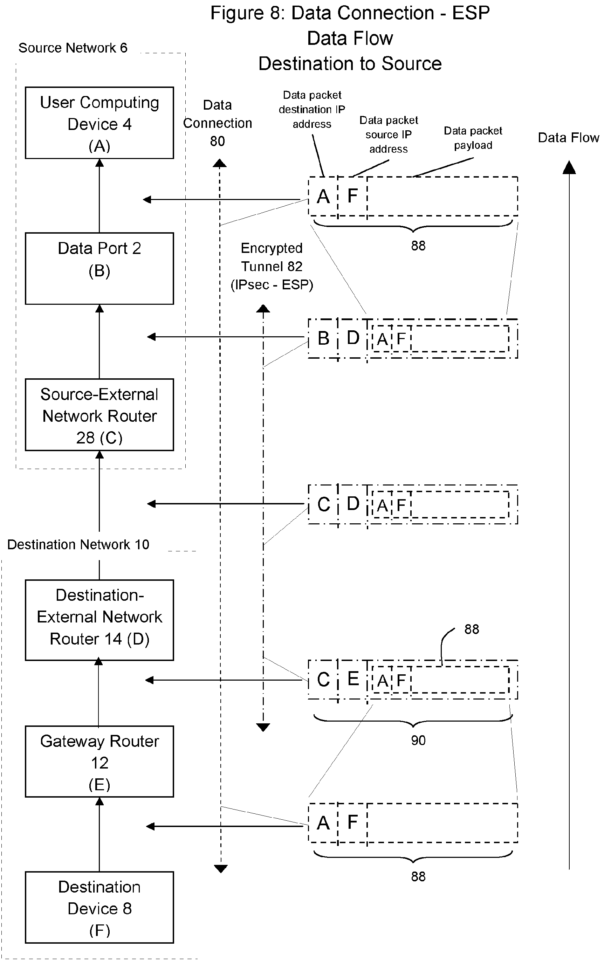

Figures 7 and 8 illustrate data flow between a user computing device and a destination device according to an embodiment of the invention, with outward data flow being shown in Figure 7 and inward data flow in Figure 8.

A data connection 80 is established between the user computing device 4 and destination device 8. An encrypted tunnel 82 is provided between the data port 2 on the source network 6 and the gateway router 12 on the destination network 10. For example, the ESP protocol of the IPsec protocol suite may be used to establish the encrypted tunnel.

In contrast to the configuration of Figure 5, it can be seen in Figure 7 that the data packet sent from the user computing device includes the IP address B of the data port as its destination address, rather than the address of the destination device. Crucially, the data port then changes or replaces this destination address to correspond to the address F of the destination device. The data port 2 then augments this modified data packet 84' to form an augmented data packet 86. The destination address of the data packet 86 is the address D of the destination-external network router 14 and its source address becomes the IP address B of the data port 2.

The ESP protocol of the IPsec protocol suite may be used to establish an encrypted tunnel 82 between the data port 2 and the gateway router 12. Modified data packet 84' forms the payload of the augmented data packet 86. ESP encrypts and authenticates this payload 84'. The data packet 84' is transmitted via source-external network router 28, an untrusted external network, and the destination-external network router 14 to the gateway router 12. It is then decrypted in gateway router 12 and forwarded on to the destination device 8 as shown in Figure 7.

Figure 8 illustrates the transmission of a data packet 88 from a destination device 8 to the user computing device 4. The payload of the data packet 84 in Figure 7 may for example represent a request for data from the destination device and Figure 8 shows the path of the requested data from the destination device 8 sent in response back to the user computing device 4. The data packet 88 includes the IP address A of the user computing device 4 as its destination address, and the IP address F of the destination device as its source address. Data packet 88 is then augmented by gateway router 12. Data packet 88 becomes the payload of the augmented data packet 90 and is authenticated and encrypted by the gateway router. The augmented data packet 90 is directed in the opposite direction to the path shown in Figure 7, to the data port 2 where its payload is decrypted to form data packet 88 which is then forwarded on to the user computing device 4.

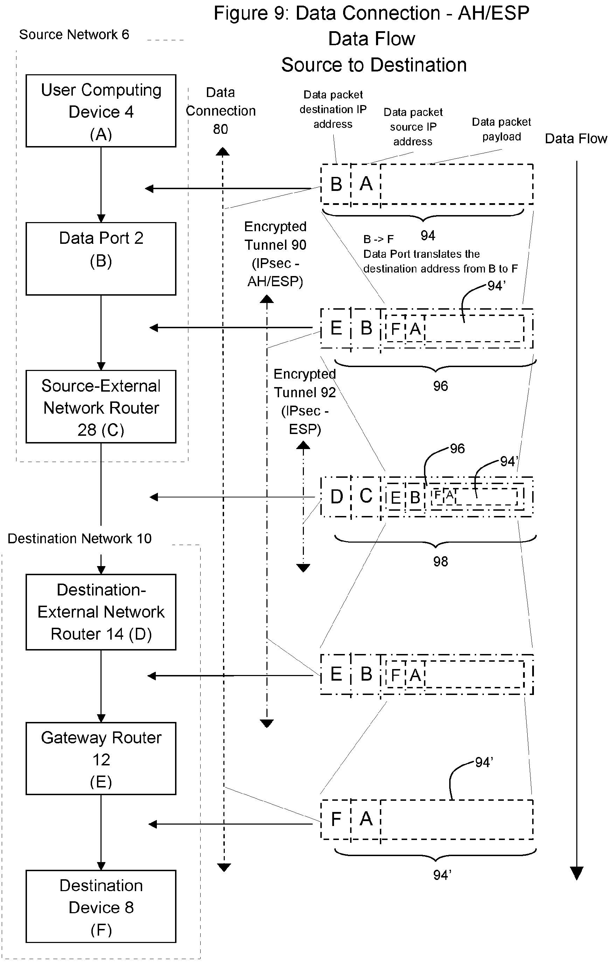

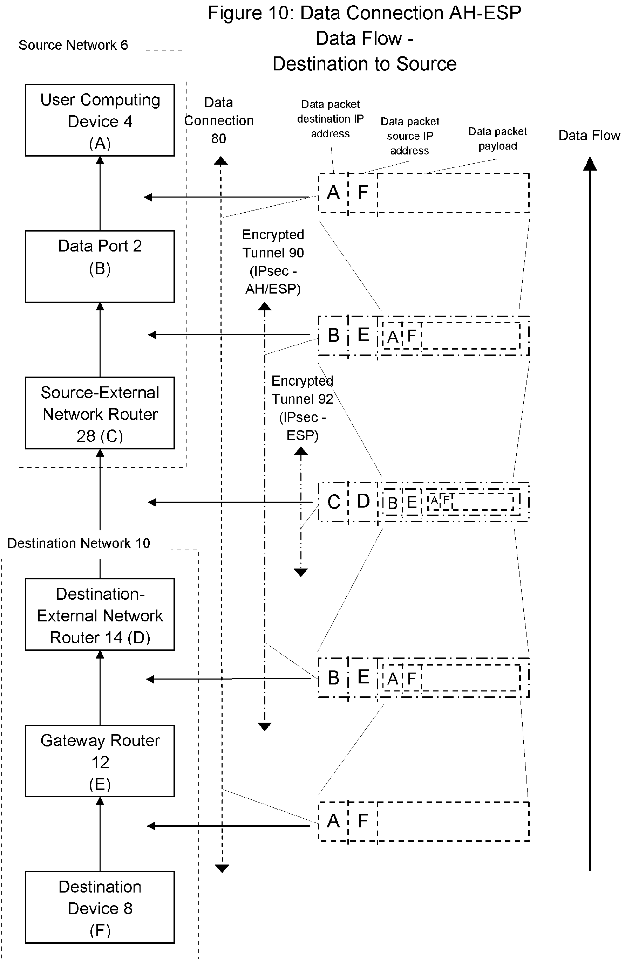

A further embodiment of the invention utilising a greater level of security is illustrated in Figures 9 and 10. In this configuration, the data packets are secured using a combination of IPsec protocols: ESP and Authentication Header (AH). Whilst ESP authenticates and encrypts the data packet payload only, AH authenticates and verifies the entire data packet sent by the data port 2.

An encrypted tunnel 90 between the data port 2 and the gateway router 12 is established through a further encrypted tunnel 92 provided between the source-external network router 28 and the destination-external network router 14.

As in the Figure 7 embodiment, the data packet 94 from the user computing device has the IP address B of the data port 2 as its destination address. This is replaced by the data port to correspond to the IP address F of the destination device 8, forming modified data packet 94'. This modified data packet 94' is augmented by data port 2 to form augmented data packet 96. The destination address of the augmented data packet 96 is the IP address (E) of the gateway router 12 and its source address (B) is that of the data port 2. The entire data packet 96 is secured by the data port using both ESP and AH Data packet 96 is then further augmented by source-external network router 28. Data packet 96 becomes the payload of further augmented data packet 98 having the address D of the destination-external network router 14 as its destination address and the address C of router 28 as its source address. In this way, the source and destination addresses of augmented packet 96 are not changed by the source-external network router 28. This maintains the validity of the authentication applied to data packet 96.

When a further encrypted link or tunnel 92 (VPN) is established between the external network routers 28 and 14 of the source and destination networks 6 and 10, the encrypted link or tunnel 90 established between the data port 2 and the gateway router 12 passes through it and data packets do not undergo NAT. As shown in Figure 9, the source and destination IP addresses of the data packets 96 of the encrypted tunnel 90 between the data port 2 and the gateway router 12 remain constant between them. User data effectively passes between the source and destination networks in one encrypted tunnel embedded in another. In this arrangement, the encrypted tunnel 90 established between the data port 2 and the gateway router 12 passes from one LAN to the other joined by the VPN established between the two external network routers 28 and 14.

As the data packets 96 of the encrypted tunnel 90 established between the data port 2 and the gateway route 12 do not undergo NAT, they can be secured using both the AH and ESP IPsec protocols, further improving the security of the user data. The user data is doubly encrypted as it passes through the untrusted network between the source and destination external network routers 28 and 14.

In the destination network configurations described in the above embodiments, the destination-external network router, the destination gateway router and the destination device are implemented and shown as separate, interconnected physical devices, to reduce the risk of unencrypted data being exposed to attack from an un-trusted network. Some or all of the functions associated with these components may be combined instead into one or two physically separate devices, with the configuration used selected to suit the user's requirements.

## Claims

1. A source network (6, 60) comprising:
a source-external network router (28) for connection to an external network; and
at least one computing device (4);
**characterized in that**
the source network includes a data port arrangement (2) configured to transmit data received from the at least one computing device only to a specific destination device outside the source network via the router and the external network,
the data is sent to the data port arrangement in a data packet including a destination address associated with the data port arrangement, and the data port arrangement comprises:
an input port configured to receive the data packet from the at least one computing device on the source network;
a data processing arrangement configured to replace the destination address with the address of the destination device and to encrypt the data to be sent to the destination device; and
an output port configured to output the encrypted data for transmission to the destination device via the router and the external network.

2. A source network of claim 1, wherein the input port of the data port arrangement (2) is an Ethernet port programmed with an IP address, which is the destination address included in the data packet from the at least one computing device (4) on the source network (6, 60).

3. A source network of claim 1 or claim 2, wherein the output port of the data port arrangement (2) is an Ethernet port programmed with an IP address.

4. A source network of claim 3, wherein the IP address of the output port of the data port arrangement (2) is within the range of addresses associated with the source network (6, 60).

5. A source network of any preceding claim, wherein the data port arrangement (2) is configured to only receive data packets from the source network (6, 60) from at least one predefined computing device (4) on the source network.

6. A source network of any preceding claim, including a source network router communicatively coupled between the source-external network router (28) and the data port arrangement (2), and between the at least one computing device (4) and the data port arrangement (2).

7. A source network of claim 6, wherein the source network router is configured to only permit the data port arrangement (2) to communicate with at least one predefined computing device (4) on the source network (6, 60).

8. A source network of any of claims 1 to 5 including a source network router communicatively coupled between the source-external network router (28) and the data port arrangement (2), wherein the data port arrangement is communicatively coupled between the at least one computing device (4) and the source network router.

9. A source network of claim 8 including a further computing device communicatively coupled to the source network router without the data port arrangement (2) communicatively coupled between it and the source network router.

10. A source network of any preceding claim including a plurality of data port arrangements (2).

11. A data transfer system comprising a source network (6, 60) of any of claims 1 to 10 and a destination network (10, 62) for receiving encrypted data sent from the data port arrangement (2), the destination network comprising:
a destination-external network router (14) for connection to an external network;
a destination device (8, 50); and
a gateway router (12) communicatively coupled between the destination-external network router and the destination device and comprising:
a router input for receiving the encrypted data via the destination-external network router;
a router data processing arrangement for decrypting the data; and
a router output for outputting the decrypted data for transmission to the destination device.

12. A method of transmitting data from at least one computing device (4) on a source network (6, 60) to a specific destination device (8, 50) outside the source network via a source-external network router (28) on the source network and an external network communicatively coupled to the router, wherein the data from the at least one computing device is in a data packet including a destination address associated with a data port arrangement (2) on the source network, the method comprising the steps of:
transmitting the data packet from the at least one computing device to an input port of the data port arrangement;
processing the data packet with the data port arrangement to replace the destination address with the address of the destination device and to encrypt the data to be sent to the destination device; and
transmitting the encrypted data from the data port arrangement only to the destination device via the source-external network router and the external network.

13. A method of claim 12, wherein the transmitted data represents a request for data from the destination device (8, 50), and the method includes the further steps of:
retrieving the requested data from the destination device; and
transmitting the requested data from the destination device to the at least one computing device (4) on the source network (6, 60) via the external network and the source-external network router (28).

14. A method of transmitting data of claim 12 or claim 13, wherein the source network (6, 60) is as claimed in any of claims 1 to 10.

15. A method of transferring data to at least one computing device (4) on a source network (6, 60) of any of claims 1 to 10 from a destination device (8, 50) from outside the source network, the method comprising the steps of:
allocating the destination device the IP address of the input port of the data port arrangement (2);
substituting the data port arrangement with the destination device; and
transmitting data from the destination device to the at least one computing device.

## Patentansprüche

1. Quellennetzwerk (6, 60), umfassend:
einen quellenexternen Netzwerkrouter (28) zur Verbindung mit einem externen Netzwerk; und
mindestens eine Datenverarbeitungsvorrichtung (4);
**dadurch gekennzeichnet, dass**
das Quellennetzwerk eine Datenportanordnung (2) umfasst, die dafür ausgelegt ist, von der mindestens einen Datenverarbeitungsvorrichtung empfangene Daten nur über den Router und das externe Netzwerk zu einer spezifischen Zielvorrichtung außerhalb des Quellennetzwerks zu senden,
die Daten in einem Datenpaket zu der Datenportanordnung gesendet werden, das eine der Datenportanordnung zugeordnete Zieladresse umfasst, und die Datenportanordnung Folgendes umfasst:
einen Eingangsport, der dafür ausgelegt ist, das Datenpaket von der mindestens einen Datenverarbeitungsvorrichtung in dem Quellennetzwerk zu empfangen;
eine Datenverarbeitungsanordnung, die dafür ausgelegt ist, die Zieladresse mit der Adresse der Zielvorrichtung zu ersetzen und die zu der Zielvorrichtung zu sendenden Daten zu verschlüsseln; und
einen Ausgangsport, der dafür ausgelegt ist, die verschlüsselten Daten zur Übertragung zu der Zielvorrichtung über den Router und das externe Netzwerk auszugeben.

2. Quellennetzwerk nach Anspruch 1, wobei der Eingangsport der Datenportanordnung (2) ein Ethernet-Port ist, der mit einer IP-Adresse programmiert ist, die die Zieladresse ist, die in dem Datenpaket von der mindestens einen Datenverarbeitungsvorrichtung (4) in dem Quellennetzwerk (6, 60) enthalten ist.

3. Quellennetzwerk nach Anspruch 1 oder Anspruch 2, wobei der Ausgangsport der Datenportanordnung (2) ein Ethernet-Port ist, der mit einer IP-Adresse programmiert ist.

4. Quellennetzwerk nach Anspruch 3, wobei die IP-Adresse des Ausgangsports der Datenportanordnung (2) in dem Bereich von Adressen liegt, der dem Quellennetzwerk (6, 60) zugeordnet ist.

5. Quellennetzwerk nach einem der vorhergehenden Ansprüche, wobei die Datenportanordnung (2) dafür ausgelegt ist, nur Datenpakete von dem Quellennetzwerk (6, 60) von mindestens einer vordefinierten Datenverarbeitungsvorrichtung (4) in dem Quellennetzwerk zu empfangen.

6. Quellennetzwerk nach einem der vorhergehenden Ansprüche, das einen Quellennetzwerkrouter umfasst, der kommunikativ zwischen den quellenexternen Netzwerkrouter (28) und die Datenportanordnung (2) und zwischen die mindestens eine Datenverarbeitungsvorrichtung (4) und die Datenportanordnung (2) gekoppelt ist.

7. Quellennetzwerk nach Anspruch 6, wobei der Quellennetzwerkrouter dafür ausgelegt ist, der Datenportanordnung (2) nur zu gestatten, mit mindestens einer vordefinierten Datenverarbeitungsvorrichtung (4) in dem Quellennetzwerk (6, 60) zu kommunizieren.

8. Quellennetzwerk nach einem der Ansprüche 1-5, das einen Quellennetzwerkrouter umfasst, der kommunikativ zwischen den quellenexternen Netzwerkrouter (28) und die Datenportanordnung (2) gekoppelt ist, wobei die Datenportanordnung kommunikativ zwischen die mindestens eine Datenverarbeitungsvorrichtung (4) und den Quellennetzwerkrouter gekoppelt ist.

9. Quellennetzwerk nach Anspruch 8, das eine weitere Datenverarbeitungsvorrichtung umfasst, die ohne die kommunikativ zwischen sie und den Quellennetzwerkrouter gekoppelte Datenportanordnung (2) kommunikativ mit dem Quellennetzwerkrouter gekoppelt ist.

10. Quellennetzwerk nach einem der vorhergehenden Ansprüche, das mehrere Datenportanordnungen (2) umfasst.

11. Datentransfersystem, das ein Quellennetzwerk (6, 60) nach einem der Ansprüche 1 bis 10 und ein Zielnetzwerk (10, 62) zum Empfangen von verschlüsselten Daten, die von der Datenportanordnung (2) gesendet werden, umfasst, wobei das Zielnetzwerk Folgendes umfasst:
einen zielexternen Netzwerkrouter (14) zur Verbindung mit einem externen Netzwerk;
eine Zielvorrichtung (8, 50); und
einen Gateway-Router (12), der kommunikativ zwischen den zielexternen Netzwerkrouter und die Zielvorrichtung gekoppelt ist und Folgendes umfasst:
einen Routereingang zum Empfangen der verschlüsselten Daten über den zielexternen Netzwerkrouter;
eine Router-Datenverarbeitungsanordnung zum Entschlüsseln der Daten; und
einen Routerausgang zum Ausgeben der entschlüsselten Daten zur Übertragung zu der Zielvorrichtung.

12. Verfahren zum Senden von Daten von mindestens einer Datenverarbeitungsvorrichtung (4) in einem Quellennetzwerk (6, 60) zu einer spezifischen Zielvorrichtung (8, 50) außerhalb des Quellennetzwerks über einen quellenexternen Netzwerkrouter (28) im Quellennetzwerk und ein kommunikativ mit dem Router gekoppeltes externes Netzwerk, wobei die Daten von der mindestens einen Datenverarbeitungsvorrichtung in einem Datenpaket vorliegen, das eine Zieladresse umfasst, die einer Datenportanordnung (2) im Quellennetzwerk zugeordnet ist, wobei das Verfahren die folgenden Schritt umfasst:
Senden des Datenpakets von der mindestens einen Datenverarbeitungsvorrichtung zu einem Eingangsport der Datenportanordnung;
Verarbeiten des Datenpakets mit der Datenportanordnung, um die Zieladresse mit der Adresse der Zielvorrichtung zu ersetzen und um die zu der Zielvorrichtung zu sendenden Daten zu verschlüsseln; und
Senden der verschlüsselten Daten von der Datenportanordnung nur zu der Zielvorrichtung über den quellenexternen Netzwerkrouter und das externe Netzwerk.

13. Verfahren nach Anspruch 12, wobei die gesendeten Daten eine Anforderung von Daten von der Zielvorrichtung (8, 50) umfassen und das Verfahren die folgenden weiteren Schritte umfasst:
Abrufen der angeforderten Daten von der Zielvorrichtung; und
Senden der angeforderten Daten von der Zielvorrichtung zu der mindestens einen Datenverarbeitungsvorrichtung (4) im Quellennetzwerk (6, 60) über das externe Netzwerk und den quellenexternen Netzwerkrouter (28).

14. Verfahren zum Senden von Daten nach Anspruch 12 oder Anspruch 13, wobei das Quellennetzwerk (6, 60) wie in einem der Ansprüche 1 bis 10 beansprucht ist.

15. Verfahren zum Transferieren von Daten zu mindestens einer Datenverarbeitungsvorrichtung (4) in einem Quellennetzwerk (6, 60) nach einem der Ansprüche 1 bis 10 von einer Zielvorrichtung (8, 50) von außerhalb des Quellennetzwerks, wobei das Verfahren die folgenden Schritte umfasst:
Vergeben der IP-Adresse des Eingangsports der Datenportanordnung (2) an die Zielvorrichtung;
Ersetzen der Datenportanordnung mit der Zielvorrichtung; und
Senden von Daten von der Zielvorrichtung zu der mindestens einen Datenverarbeitungsvorrichtung.

## Revendications

1. Réseau source (6, 60) comprenant :
un routeur de réseau source-externe (28) pour la connexion à un réseau externe ; et
au moins un dispositif informatique (4) ;
**caractérisé en ce que**
le réseau source comprend un agencement de ports de données (2) configuré pour transmettre les données reçues d'au moins un dispositif informatique à uniquement un dispositif de destination spécifique en dehors du réseau source par l'intermédiaire du routeur et du réseau externe,
les données sont envoyées à l'agencement de ports de données dans un paquet de données comprenant une adresse de destination associée à l'agencement de ports de données, et l'agencement de ports de données comprend :
un port d'entrée configuré pour recevoir le paquet de données du ou des dispositifs informatiques sur le réseau source ;
un agencement de traitement de données configuré pour remplacer l'adresse de destination par l'adresse du dispositif de destination et pour crypter les données à envoyer au dispositif de destination ; et
un port de sortie configuré pour émettre les données cryptées en vue de leur transmission au dispositif de destination par l'intermédiaire du routeur et du réseau externe.

2. Réseau source selon la revendication 1, dans lequel le port d'entrée de l'agencement de ports de données (2) est un port Ethernet programmé avec une adresse IP, qui est l'adresse de destination incluse dans le paquet de données provenant d'au moins un dispositif informatique (4) sur le réseau source (6, 60).

3. Réseau source selon la revendication 1 ou la revendication 2, dans lequel le port de sortie de l'agencement de ports de données (2) est un port Ethernet programmé avec une adresse IP.

4. Réseau source selon la revendication 3, dans lequel l'adresse IP du port de sortie de l'agencement de ports de données (2) se situe dans la plage d'adresses associée au réseau source (6, 60).

5. Réseau source selon l'une quelconque des revendications précédentes, dans lequel l'agencement de ports de données (2) est configuré pour recevoir uniquement des paquets de données du réseau source (6, 60) d'au moins un dispositif informatique prédéfini (4) sur le réseau source.

6. Réseau source selon l'une quelconque des revendications précédentes, comprenant un routeur du réseau source couplé en communication entre le routeur de réseau source-externe (28) et l'agencement de ports de données (2), et entre le ou les dispositifs informatiques (4) et l'agencement de ports de données (2).

7. Réseau source selon la revendication 6, dans lequel le routeur de réseau source est configuré pour permettre uniquement à l'agencement de ports de données (2) de communiquer avec au moins un dispositif informatique prédéfini (4) sur le réseau source (6, 60).

8. Réseau source selon l'une quelconque des revendications 1 à 5, comprenant un routeur de réseau source couplé en communication entre le routeur de réseau source-externe (28) et l'agencement de ports de données (2), dans lequel l'agencement de ports de données est couplé en communication entre le ou les dispositifs informatiques (4) et le routeur du réseau source.

9. Réseau source selon la revendication 8, comprenant un autre dispositif informatique couplé en communication avec le routeur du réseau source sans que l'agencement de ports de données (2) soit couplé en communication entre celui-ci et le routeur du réseau source.

10. Réseau source selon l'une quelconque des revendications précédentes, comprenant plusieurs agencements de ports de données (2).

11. Système de transfert de données comprenant un réseau source (6, 60) selon l'une quelconque des revendications 1 à 10 et un réseau de destination (10, 62) pour recevoir des données cryptées envoyées depuis l'agencement de ports de données (2), le réseau de destination comprenant :
un routeur de réseau de destination externe (14) pour la connexion à un réseau externe ;
un dispositif de destination (8, 50) ; et
un routeur de passerelle (12) couplé en communication entre le routeur de réseau de destination externe et le dispositif de destination et comprenant :
une entrée de routeur pour recevoir les données cryptées par l'intermédiaire du routeur de réseau de destination externe ;
un agencement de traitement de données de routeur pour décrypter les données ; et
une sortie de routeur pour émettre les données décryptées en vue de leur transmission au dispositif de destination.

12. Procédé de transmission de données d'au moins un dispositif informatique (4) sur un réseau source (6, 60) vers un dispositif de destination spécifique (8, 50) en dehors du réseau source par l'intermédiaire d'un routeur de réseau source-externe (28) sur le réseau source et un réseau externe couplé en communication au routeur, dans lequel les données provenant d'au moins un dispositif informatique se trouvent dans un paquet de données comprenant une adresse de destination associée à un agencement de ports de données (2) sur le réseau source, le procédé comprenant les étapes consistant à :
transmettre le paquet de données du ou des dispositifs informatiques à un port d'entrée de l'agencement de ports de données ;
traiter le paquet de données avec l'agencement de ports de données pour remplacer l'adresse de destination par l'adresse du dispositif de destination et crypter les données à envoyer au dispositif de destination ; et
transmettre les données cryptées de l'agencement de ports de données uniquement au dispositif de destination par l'intermédiaire du routeur de réseau source-externe et le réseau externe.

13. Procédé selon la revendication 12, dans lequel les données transmises représentent une demande de données provenant du dispositif de destination (8, 50), et le procédé comprend en outre les étapes consistant à :
récupérer les données demandées dans le dispositif de destination ; et
transmettre les données demandées du dispositif de destination au dispositif ou aux dispositifs informatiques (4) sur le réseau source (6, 60) par l'intermédiaire du réseau externe et le routeur de réseau source-externe (28).

14. Procédé de transmission de données selon la revendication 12 ou la revendication 13, dans lequel le réseau source (6, 60) est tel que revendiqué dans l'une quelconque des revendications 1 à 10.

15. Procédé de transfert de données vers au moins un dispositif informatique (4) sur un réseau source (6, 60) selon l'une quelconque des revendications 1 à 10 à partir d'un dispositif de destination (8, 50) depuis l'extérieur du réseau source, le procédé comprenant les étapes consistant à :
attribuer au dispositif de destination l'adresse IP du port d'entrée de l'agencement de ports de données (2) ;
remplacer l'agencement de ports de données par le dispositif de destination ; et
transmettre les données du dispositif de destination au dispositif ou aux dispositifs informatiques.
